**Europäisches Patentamt**

(19) **European Patent Office**

**Office européen des brevets**

(11) Numéro de publication: **0 060 207**
**B1**

(12) **FASCICULE DE BREVET EUROPEEN**

(45) Date de publication du fascicule du brevet:
24.07.85

(51) Int. Cl.⁴: **B 01 J 47/10**, B 01 J 8/20

(21) Numéro de dépôt: **82420030.7**

(22) Date de dépôt: **03.03.82**

(54) Procédé et dispositif d'extraction d'ions d'un liquide clair ou contenant des matières en suspension par mise en contact avec un échangeur.

(30) Priorité: **05.03.81 FR 8104900**

(43) Date de publication de la demande:
**15.09.82 Bulletin 82/37**

(45) Mention de la délivrance du brevet:
**24.07.85 Bulletin 85/30**

(84) Etats contractants désignés:
**BE CH DE GB IT LI LU NL SE**

(56) Documents cités:
**CH - A - 104 569**
**FR - A - 1 176 525**
**FR - A - 1 189 812**
**FR - A - 1 215 985**
**FR - A - 2 354 968**
**GB - A - 879 834**
**GB - A - 1 329 016**
**US - A - 3 738 814**
**US - A - 4 035 292**

(73) Titulaire: **SOCIETE CENTRALE DE L'URANIUM ET DES MINERAIS ET METAUX RADIOACTIFS SCUMRA,**
**69-73, rue Dutot, F-75738 Paris Cedex 15 (FR)**

(72) Inventeur: **Capitani, Enzo, Antignac, F-15240 Saignes (FR)**
Inventeur: **Teissie, Jean, 1, Impasse des Quatre Coins, F-91730 Chamarande (FR)**

(74) Mandataire: **Lederer, Franz, Dr. et al, Patentanwälte Dr. Franz Lederer Dipl.-Ing. Reiner F. Meyer-Roxlau Lucile-Grahn-Strasse 22, D-8000 München 80 (DE)**

ACTORUM AG

## Description

La présente invention concerne un procédé et un dispositif d'extraction d'ions d'un liquide clair ou contenant des matières en suspension par mise en contact avec un échangeur.

L'homme de l'art sait que, dans le domaine du transfert de matière, les ions présents dans un liquide peuvent être échangés de façon reversible et stoéchiométrique au moyen de corps présentant des anions ou des cations mobiles et appelés échangeurs d'ions. A l'état solide, ces corps sont constitués de composés minéraux ou organiques ayant généralement la forme de grains ou de billes de dimensions appropriées à l'utilisation envisagée.

La réaction d'échange étant équilibrée, pour atteindre un taux de transfert convenable, il est nécessaire d'assurer un mouvement relatif entre les grains d'échangeurs et le liquide. D'où, la mise au point de procédés et dispositifs visant à rendre mobile l'un ou l'autre des matériaux en présence, ou même les deux. La technique la plus classique consiste à faire passer le liquide à travers un lit fixe de grains contenus dans une colonne. Elle est utilisée notamment pour la déminéralisation de l'eau, mais n'est applicable que si le liquide à traiter est parfaitement clair car, en effet, si ce dernier contient des particules solides en suspension, comme c'est le cas pour une pulpe, celles-ci sont arrêtées par les grains et provoquent, à plus ou moins long terme, un colmatage du lit. En outre, quand les grains atteignent leur capacité maximum d'extraction, il est nécessaire de les traiter pour récupérer les ions fixés et de les régénérer avant de les remettre en œuvre; ceci demande un certain temps et, donc, si l'on veut avoir une installation fonctionnant en continu, il faut alors disposer d'au moins deux colonnes d'extraction, ce qui n'est pas intéressant du point de vue économique.

C'est pourquoi, les chercheurs se sont ingéniés à mettre au point des techniques au moyen desquelles une exploitation plus ou moins continue peut être réalisée avec une seule colonne, et ils se sont orientés vers les lits mobiles, c'est-à-dire des systèmes où, non seulement le liquide, mais aussi les grains d'échangeurs, sont mis en mouvement par rapport à la paroi de la colonne qui les contient.

Ces techniques se partagent en deux groupes: dans l'un, le lit est dit tassé parce que le mouvement est obtenu par une succession de déplacements portant chacun sur une quantité plus ou moins grande de grains, dans l'autre, le lit est dit fluidisé car les grains se comportent comme un fluide et se déplacent tous suivant un même cycle de vitesse.

Dans ce dernier groupe, on peut citer la technique enseignée par US-A 4 035 292 et qui consiste à fluidiser les grains au moyen du liquide à traiter dans une colonne comportant une série de chambres superposées où s'effectue le transfert d'ions; le déplacement de l'échangeur s'effectue d'une chambre à celle qui est placée immédiatement en-dessous en déviant une partie du débit de liquide à l'extérieur de la colonne; on récupère ainsi à la partie inférieure de la colonne les grains plus ou moins chargés en ions que l'on évacue vers un système de régénération. On retrouve cette technique dans US-A 3 738 814 mais avec la différence que les grains passent d'un compartiment à l'autre de la colonne par arrêt de la circulation de liquide et, même, par inversion du sens de cette circulation.

Dans ces différentes techniques, on utilise donc des colonnes renfermant des plateaux et le déplacement des grains du haut en bas de la colonne s'effectue par arrêt cyclique de la fluidisation soit en dérivant une partie du débit de liquide, soit en le stoppant, soit, encore, en inversant le sens de propagation dudit liquide. Dans d'autres encore, on procède à une purge de liquide en bas de la colonne et il faut alors prévoir une grille pour empêcher les grains de s'échapper de la colonne.

Si toutes ces techniques constituent des améliorations importantes par rapport aux lits fixes, elles présentent néanmoins quelques inconvénients. C'est ainsi que l'arrêt cyclique de la fluidisation diminue la durée de fixation des échangeurs réduisant d'autant l'efficacité de la colonne; il est nécessaire également d'équiper l'installation avec une série de vannes automatiques à ouverture programmée dont la commande par minuterie électronique ou électromagnétique est complexe et coûteuse. En outre, la conduite de tels ensembles nécessite un contrôle attentif et délicat du débit de liquide afin de rester dans les limites de fluidisation et de ne pas provoquer l'entraînement de grains hors de la colonne qui conduirait à une perte inadmissible.

De plus, la présence de plateaux destinés à former les compartiments ou les chambres de même que les grilles qui supportent les grains sont autant de points d'accrochage et, donc, de sources de colmatage notamment lorsqu'on traite des pulpes plus ou moins chargées en argiles qui s'agglutinent aux grains.

Il faut ajouter que, dans ces installations, rien n'empêche l'entraînement par la pulpe de matières sableuses qui provoquent une usure des grilles support et une abrasion des grains d'où résultent des pertes par «envolement» et également un accroissement des risques de colmatage.

C'est pourquoi, la demanderesse, consciente des difficultés que présentait l'utilisation de ces techniques, a cherché et mis au point un procédé et un dispositif d'une grande simplicité mettant en œuvre une seule colonne dans laquelle le lit est maintenu en fluidisation permanente, la récupération des grains chargés en ions s'effectue en continu lorsque cette charge a atteint un taux optimum et où les phénomènes de colmatage, d'abrasion, d'usure et d'entraînement de grains sont fortement réduites.

Autant d'avantages qui permettent de réaliser une extraction effectivement continue et, donc, d'assurer une capacité de traitement maximum tout en maintenant le matériel dans un bon état de marche.

Le brevet britannique 879.834 a déjà proposé de combiner une alimentation permanente en liquide contenant des matières en suspension sous un débit suffisant pour maintenir constamment le lit dans un état fluidisé avec des pulsations cycliques obtenues par injection périodique d'air comprimé dans un espace latéral en communication avec le bas de la colonne liquide ainsi formée.

L'invention prévoit, au contraire, un procédé d'échange d'ions en continu entre un liquide clair ou liquide contenant des matières en suspension et un lit mobile de grains de substances échangeuses d'ions, par passage de ce liquide à travers ledit lit mobile, celui-ci étant disposé dans une colonne verticale et les grains se déplaçant globalement de haut en bas et étant prélevés à un niveau de prélèvement situé un peu au-dessus du bas de la colonne, tandis que le liquide se déplace de bas en haut à partir du bas de colonne où il est introduit de manière permanente à un débit constant suffisant pour maintenir constamment le lit dans un état fluidisé et que des pulsations sont simultanément et cycliquement appliquées à ce lit par injection périodique d'un fluide, caractérisé en ce que cette injection périodique est une injection, effectuée dans ledit lit au-dessus dudit niveau de prélèvement, d'une portion dudit liquide retirée à la partie supérieure de la colonne verticale.

Ainsi, l'injection agit directement au sein même du lit fluidisé et elle n'introduit pas de fluide étranger.

On sait que les grains d'échangeurs ont une densité qui croît en fonction de la quantité d'ions fixés et on peut penser que, lorsqu'ils sont fluidisés, il se produit, du haut en bas de la colonne, une sédimentation par densité croissante. En fait, il n'en est rien car les grains sont généralement proches les uns des autres, ce qui gêne le classement et se traduit par la présence de grains légers dits «égarés» mélangés aux grains lourds. Pour atténuer ce phénomène, il est possible de placer à l'intérieur de la colonne des plateaux percés de petits orifices et d'effectuer ce classement par arrêt de la fluidisation ou inversion du sens de circulation du liquide, mais on retrouve alors les inconvénients d'exploitation cités plus haut.

Au cours de ses recherches, la demanderesse a constaté que le classement des grains pouvait être réalisé de façon plus rapide et plus complète en soumettant le lit fluidisé à des pulsations cycliques obtenues en admettant rapidement et périodiquement à la partie basse du lit une quantité de liquide initialement prélevée à la partie haute de la colonne. Chaque admission a pour effet de créer un mouvement d'élévation brutal de liquide vers le haut et de provoquer ainsi une ascension des grains d'autant plus grande qu'ils sont légers. Pendant les périodes d'arrêt qui séparent les admissions, ce phénomène est accentué puisque les grains les plus lourds descendent alors plus rapidement.

A la différence des techniques antérieures, un classement effectué de cette façon s'établit même en maintenant le lit en fluidisation permanente et offre donc la possibilité d'avoir un débit d'alimentation en liquide à traiter absolument continu et à vitesse constante. Ceci a l'avantage d'empêcher l'entraînement par le liquide des grains hors de la colonne, phénomène inévitable lorsque la colonne fonctionne avec un débit d'alimentation irrégulier.

Un tel classement s'effectue également en l'absence de tout plateau ou support de grains dont il était indispensable d'équiper les colonnes de l'art antérieur et, ainsi, le procédé suivant l'invention est aussi caractérisé en ce que le lit est continu à l'intérieur de la colonne et peut se déplacer librement en son sein. Ceci évite les colmatages et leurs répercussions telles que la création, en certains points de la colonne, de pertes de charges variables qui se traduisent par des cheminements préférentiels.

Le classement, tel qu'il est réalisé, a pour effet de positionner les grains les plus denses, c'est-à-dire ceux qui ont fixé le plus d'ions à extraire à la partie inférieure du lit. On peut donc les prélever en cet endroit avec la certitude qu'ils ont tous développé au maximum leur capacité d'échange. Ce qui contribue à donner à ce procédé une efficacité et une capacité de traitement très élevées, à la différence de ceux de l'art antérieur où le prélèvement s'effectuait sur un mélange de grains plus ou moins chargés.

Un tel prélèvement peut être fait de manière continue sans perturber le débit d'alimentation de la colonne.

Une autre caractéristique du procédé de l'invention réside dans le fait qu'il s'applique à des liquides contenant non seulement des matières en suspension, mais aussi des particules sableuses comme c'est le cas de la plupart des pulpes industrielles. On sait que ces matières provoquent des phénomènes d'abrasion des grains d'échangeurs. La demanderesse a résolu ce problème en soumettant localement sur son parcours le liquide d'alimentation de la colonne à une force centrifuge avant qu'il atteigne le niveau inférieur du lit. L'effet de centrifugation peut avoir lieu soit à l'intérieur de la colonne elle-même, soit sur la tuyauterie d'alimentation. Dans le premier cas, l'évacuation des matières sableuses peut être faite de manière continue à la base de la colonne. Ainsi, on débarrasse en continu le liquide de ces produits indésirables sans recourir à un prétraitement et sans, pour autant, perturber la fluidisation.

La présente invention concerne également un dispositif de mise en application du procédé décrit ci-dessus. Ce dispositif, constitué de façon classique par une colonne cylindrique verticale contenant le lit sur une partie de sa hauteur, équipée à son extrémité inférieure d'un embout fermé à sa partie basse et muni d'une tuyauterie d'alimentation en liquide à traiter et, à son extrémité supérieure, de moyens d'introduction de l'échangeur régénéré et de sortie du liquide traité, est caractérisé en ce que la colonne est dépourvue d'accessoires tels que plateaux ou grilles susceptibles de faire obstacle au classement des grains, qu'elle comporte à l'intérieur des stabilisateurs de veine liquide et, sur sa paroi latérale, deux piquages en relation avec un générateur de pulsations cycliques qui débouchent dans le liquide, l'un en haut au-dessus du lit, l'autre en bas au sein du lit, que l'embout est conique et équipé, sur sa paroi latérale, d'un système de prélèvement des grains d'échangeurs les plus denses.

Ainsi, de manière originale, la colonne ne contient aucun plateau qui, dans l'art antérieur, permettait, en combinaison avec un arrêt de la fluidisation, d'obtenir un certain classement des grains d'échangeurs.

De plus, il n'y a pas de grille support des grains, ceux-ci venant se déposer dans l'embout en cas d'arrêt volontaire de l'installation et se remettant facilement en suspension par une réalimentation en liquide.

La colonne comporte seulement à l'intérieur des stabilisateurs de veines liquides constitués par des disques dans lesquels ont été pratiquées des ouvertures de grandes dimensions qui n'empêchent pas la pesanteur et les pulsations d'exercer librement leurs effets sur les grains d'échangeurs.

Cette colonne est pourvue sur sa paroi latérale de deux piquages destinés à être reliés à un générateur depulsations et situés, l'un en haut au-dessus du lit, et l'autre en bas au niveau du lit. Ces piquages permettent chacun respectivement, d'une part, le prélèvement d'une quantité de liquide clair qui surnage au-dessus du lit, d'autre part, la réinjection de ce liquide dans le lit, de manière à pouvoir créer les pulsations cycliques.

Ces piquages débouchent verticalement à l'intérieur de la colonne, celui du haut étant orienté vers le bas, et celui du bas, vers le haut, de préférence, dans l'axe de la colonne et par l'intermédiaire d'un déflecteur et d'un répartiteur conique, de manière à propager le mouvement de pulsation sur toute la section de la colonne. Tout générateur susceptible de créer des pulsations cycliques par transfert de liquide entre ces deux piquages, peut convenir à l'invention.

Le dispositif est aussi caractérisé en ce que la colonne est équipée à son extrémité inférieure d'un embout conique pourvu, sur sa paroi latérale, d'un système qui permet de prélever les grains d'échangeurs les plus denses. En effet, en plaçant un cône en bas de la colonne, on crée une zone où la section de passage du liquide est plus petite et où donc, la vitesse de circulation est supérieure à la vitesse moyenne dans la partie cylindrique de la colonne; les grains d'échangeur sont alors soumis à une poussée plus importante que dans la colonne elle-même et, de cette façon, on stabilise la partie basse du lit à un certain niveau. C'est dans cette zone que s'accumulent, sous l'effet des pulsations, les grains les plus chargés en ions et que se situe donc le système de prélèvement. Ce dernier est formé d'un piquage relié extérieurement à une vanne calibrée qui laisse passer les grains en continu ou de façon rythmique et à un système de transfert qui envoie ces derniers à une station de régénération avant leur réintroduction en haut de la colonne pour réaliser un nouveau cycle d'extraction.

Le dispositif selon l'invention est aussi caractérisé par un générateur de pulsations particulier se composant d'un tube vertical de hauteur voisine à celle du lit, fermé à son extrémité inférieure, relié à son extrémité supérieure à un système permettant de le mettre alternativement, et suivant une durée contrôlée, en communication avec une source de gaz sous pression ou avec l'atmosphère et muni, sur sa paroi latérale, de deux piquages en liaison avec les piquages latéraux de la colonne par l'intermédiaire de clapets anti-retour disposés de façon à pouvoir provoquer dans la colonne un mouvement de bas en haut en utilisant une fraction du liquide circulant dans la colonne.

Le fonctionnement de ce générateur est le suivant:
le tube étant rempli de liquide jusqu'à un niveau correspondant au niveau supérieur du liquide dans la colonne, on admet de l'air sous pression à la partie supérieure du tube. Sous l'effet de cette pression, le clapet, placé sur le piquage supérieur, se ferme tandis que l'autre s'ouvre et laisse s'écouler le liquide dans la colonne en provoquant une pulsation qui se propage sur toute la hauteur du lit; une minuterie ferme alors la vanne d'admission d'air comprimé et ouvre une vanne de mise à l'air; les clapets prennent des positions inverses et le liquide de la colonne s'écoule par le piquage supérieur vers le tube jusqu'à équilibrer les niveaux, et le cycle reprend.

De cette manière, aucune perturbation n'affecte la régularité de la fluidisation dans la colonne et la constance du débit liquide.

Une particularité de l'invention est d'éviter les phénomènes d'abrasion des grains d'échangeurs par les matières sableuses qui accompagnent généralement les pulpes. Pour celà, on soumet localement le liquide à traiter à une force centrifuge. Ceci est réalisé de manière originale en prolongeant l'embout conique vers le bas par une partie cylindrique fermée à son extrémité supérieure par une cloison percée en son centre d'une ouverture sur laquelle est dadptée une portion de tuyauterie qui s'allonge vers le bas sur un tiers au moins de la hauteur du cylindre et qui communique avec la partie conique par un clapet anti-retour situé sur cette tuyauterie empêchant la descente de résine en cas d'arrêt; sur ledit cylindre est fixée tangentiellement à la paroi et suivant une direction perpendiculaire à l'axe de la colonne, la tuyauterie d'alimentation en liquide à traiter.

On réalise ainsi un séparateur centrifuge intégré à la colonne elle-même, dans lequel le liquide est animé d'un mouvement de rotation au cours duquel, sous l'action de la force centrifuge, les matières sableuses sont dirigées vers la paroi et descendent vers le bas du cylindre tandis que le liquide épuré s'achemine vers la colonne par la tuyauterie centrale. Ces matières sableuses peuvent être évacuées, de manière continue ou non, par l'intermédiaire d'un cône placé en-dessous du cylindre et dont le sommet est équipé d'un orifice et d'une vanne.

En variante, le séparateur centrifuge peut être placé sur la tuyauterie d'alimentation en liquide à traiter en amont de la partie cylindrique de l'embout.

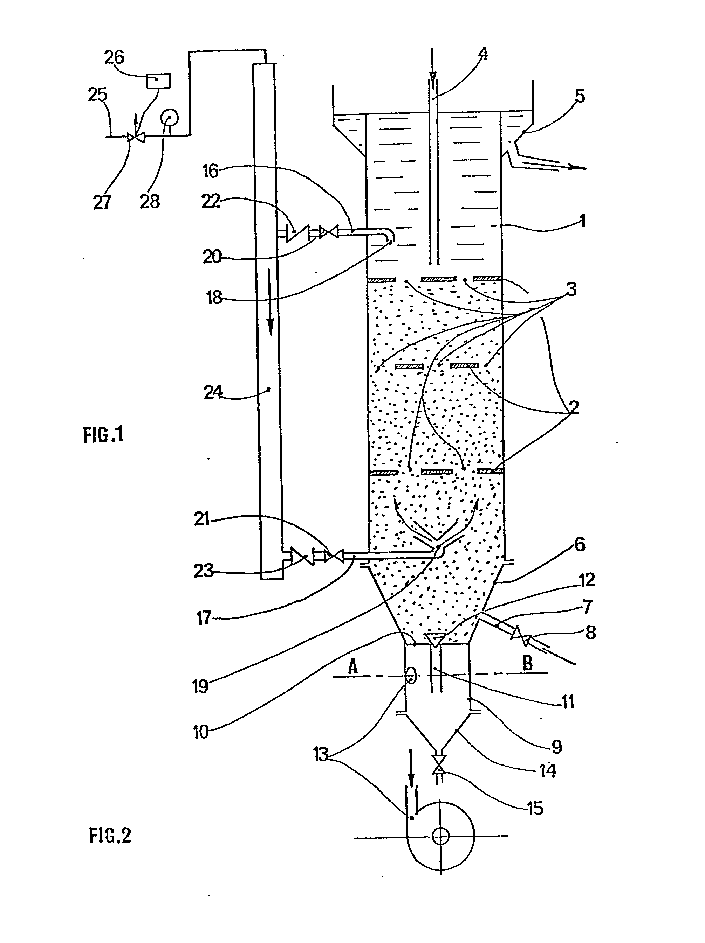

L'invention sera mieux comprise à l'aide des dessins qui accompagnent la présente demande et qui représentent à la figure 1, une coupe verticale de l'ensemble du dispositif et, à la figure 2, une coupe perpendiculaire à l'axe de la colonne et située au niveau de la tuyauterie d'alimentation.

Sur la figure 1, on voit une colonne cylindrique (1) renfermant trois disques (2) stabilisateurs de veines liquides percés d'ouvertures (3) disposées en quinconce les unes par rapport aux autres. L'extrémité supérieure de la colonne est équipée d'une tuyauterie (4) d'alimentation en grains d'échangeurs régénérés et d'une virole (5) par laquelle déborde le liquide traité. L'extrémité inférieure de la colonne est munie d'un embout conique (6) à la paroi latérale duquel est fixée une tuyauterie (7) et une vanne (8) de prélèvement des grains d'échangeurs chargés en ions à extraire. Cet embout est prolongé vers le bas par une partie cylindrique (9), séparée de la partie conique par une cloison (10) possédant une ouverture communiquant avec une portion de tuyauterie (11) sur laquelle est placé un clapet anti-retour (12). A la paroi latérale de ce cylindre est fixée tangentiellement la tuyauterie (13) d'alimentation en liquide à traiter. Ce cylindre est fermé à son extrémité inférieure par un cône (14) au sommet duquel est adaptée une vanne (15).

Sur les deux piquages latéraux (16) et (17) de la colonne débouchant respectivement en (18) dans le liquide et à la base du lit par l'intermédiaire d'un déflecteur et d'un répartiteur conique (19), sont placés des vannes (20) et (21) et des clapets antiretour (22) et (23), qui sont en relation avec le générateur de pulsations formé d'un tube vertical (24) fermé à son extrémité inférieure et relié à son extrémité supérieure à une source d'air comprimé (25) dont le débit est comandé par une minuterie (26) qui agit sur la vanne trois voies (27) pour la mettre en liaison soit avec la source, soit avec l'atmosphère et dont on peut suivre le cycle au moyen d'un manomètre (28).

En fonctionnement, les grains d'échangeurs régénérés sont introduits en continu dans la colonne par la tuyauterie (4) et mis en fluidisation par la circulation de liquide à traiter provenant de l'alimentation (13). A son passage dans la partie cylindrique (9), le liquide abandonne les matières sableuses qui se déposent en (14), puis les ions à extraire qui se fixent sur les grains du lit délimité à l'équilibre en haut par le niveau par le niveau du stabilisateur le plus élevé, et en bas par une surface située approximativement au niveau de la tuyauterie (7). Le liquide poursuit son ascension dans la colonne débarrassé des grains et sort de la colonne au niveau de la virole (5). Périodiquement, la minuterie (26) met le tube (24) en relation avec la source d'air comprimé, ce qui provoque, avec l'ouverture du clapet (23), un déplacement de haut en bas du liquide qu'il contient vers le déflecteur (19) et la création d'une pulsation au sein de la colonne; puis, le tube est mis en communication avec l'atmosphère, ce qui entraîne, sous l'effet de la pression hydrostatique exercée par le liquide de la colonne au niveau de la tuyauterie (18), une ouverture du clapet (22) et l'introduction du liquide dans le tube (24) jusqu'à une hauteur correspondante à celle de la virole (5).

L'invention est maintenant illustrée par un exemple d'application.

On utilise une colonne de diamètre 1,5 m, de hauteur 10 m, munie à l'intérieur de trois stabilisateurs percés de trois de diamètre 0,30 m et, à sa base, d'un embout cylindroconique de 1,85 m de haut, équipée de deux piquages latéraux dont l'un est situé à la partie inférieure de la colonne et l'autre, distant de 8,3 m, tous deux étant solidaires d'un générateur capable de produire 1200 pulsations par heure au cours desquelles on introduit chaque fois 3,5 l de liquide pendant une seconde. La colonne contient 6,5 m$^3$ de résine du type polystyrène sulfoné ayant une grosseur de grains de 0,8 mm occupant à l'état fluidisé une hauteur de 6,65 m.

On a admis dans la colonne 30 m$^3$/h d'une pulpe contenant en solution 0,325 g/l d'uranium sous forme de sulfate d'uranyle et 48 g/l de matières en suspension ayant une dimension inférieure à 85 μm.

Les grains, prélevés à raison de 0,410 m$^3$/h contenaient 28 g d'uranium par litre et la pulpe, à la sortie de la colonne, ne titrait plus que 0,004 g/l.

La présente invention trouve son application lorsqu'on veut extraire de manière absolument continue de liquides clairs ou contenant des matières en suspension, tout type d'anions ou de cations ou de sels échangeables au moyen de résines ou d'échangeurs minéraux, éviter les problèmes de colmatage et d'abrasion et obtenir un taux et une capacité d'extraction maximum.

**Revendications**

1. Procédé d'échange d'ions en continue entre un liquide clair ou liquide contenant des matières en suspension et un lit mobile de grains de substances échangeuses d'ions, par passage de ce liquide à travers ledit lit mobile, celui-ci étant disposé dans une colonne verticale et les grains se déplaçant globalement de haut en bas et étant prélevés à un niveau de prélèvement situé un peu au-dessus du bas de la colonne, tandis que le liquide se déplace de bas en haut à partir du bas de colonne où il est introduit de manière permanente à un débit constant suffisant pour maintenir constamment le lit dans un état fluidisé et que des pulsations sont simultanément et cycliquement appliquées à ce lit par injection périodique d'un fluide, caractérisé en ce que cette injection périodique est une injection, effectuée dans ledit lit au-dessus dudit niveau de prélèvement, d'une portion dudit liquide retirée à la partie supérieure de la colonne verticale.

2. Dispositif pour l'échange d'ions en continu, de mise en application du procédé de la revendication 1, entre un liquide clair ou liquide contenent des matières en suspension et un lit mobile de grains de substances échangeuses d'ions, comprenant: une colonne verticale (1) munie à son extrémité inférieure d'un embout conique (6) équipé de moyens d'alimentation (13, 11) pour introduire sous pression un liquide à traiter dans la colonne et à son extrémité supérieure de moyens de décharge (5) pour décharger le liquide après traitement de celui-ci dans la colonne; des moyens d'introduction (4) à l'extrémité supérieure de la colonne pour introduire des grains de substances échangeuses d'ions et des moyens de prélèvement (7) dans ledit embout conique (6), au-dessus desdits moyens d'alimentation (11), pour prélever des grains de substances échangeuses d'ions, de sorte qu'en fonctionnement les grains de substances échangeuses d'ions forment dans la colonne (1) un lit mobile et fluidisé, tandis qu'un générateur de pulsations est disposé à proximité de la colonne verticale pour injecter périodiquement un fluide dans la colonne, caractérisé en ce que ce générateur de pulsations comprend: un tube vertical (24) fermé à son extrémité inférieure et relié à son extrémité supérieure à un système de vanne (17) permettant la communication soit avec une source d'air comprimé (25), soit avec l'atmosphère; un conduit de remplissage (16) avec clapet anti-retour (22) reliant ledit tube vertical (24) à ladite colonne (1) à un niveau compris entre le niveau desdits moyens de décharge (5) et le niveau supérieur du lit mobile, pour remplir de liquide ledit tube vertical; et un conduit d'injection (17) avec clapet anti-retour (23) reliant ledit tube vertical (24) à la colone (1) à un niveau compris entre le niveau des moyens de prélèvement (7) et le niveau supérieur du lit mobile, pour injecter le liquide dans le lit.

3. Dispositif selon la revendication 2, caractérisé en ce que la colonne (1) comprend intérieurement des moyens de stabilisation de la beine liquide formés par une pluralité de disques (2) percés de grandes ouvertures (3) disposées en quiconce les unes par rapport aux autres.

4. Dispositif selon la revendication 2, caractérisé en ce que ledit embout conique (6) est prolongé vers le bas par une partie cylindrique (9) qui est fermée à son extrémité supérieure par une cloison (10) percée en son centre d'une ouverture à laquelle est adaptée une portion de tuyauterie (11) qui s'allonge vers le bas sur un tiers au moins de la hauteur de cette partie cylindrique (9) et qui communique avec l'embout conique (6) par un clapet anti-retour (12), lesdits moyens d'alimentation (13) étant fixés sur cette partie cylindrique (9) et tangentuellement à celle-ci et suivant une direction perpendiculaire à l'axe de la colonne (1) tandis qu'à la partie inférieure de ladite partie cylindrique se trouve un cône (14) dont le sommet est équipé de moyens de rejet (15) pour l'évacuation des matières sableuses.

**Patentansprüche**

1. Verfahren zum kontinuierlichen Ionenaustausch zwischen einer klaren Flüssigkeit oder einer suspendiertes Material enthaltenden Flüssigkeit und einem beweglichen Bett von Partikeln von Ionenaustauschersubstanzen, durch Hindurchführen dieser Flüssigkeit durch das bewegliche Bett, wobei dieses in einer vertikalen Säule angeordnet ist und sich die Partikel insgesamt von oben nach unten bewegen und an einem Abzuglevel abgezogen werden, der etwas oberhalb des Bodens der Säule liegt, während sich die Flüssigkeit von unten nach oben ausgehend vom Boden der Säule bewegt, wo sie in permanenter Weise mit einer konstanten Zuflussmenge eingeführt wird, die ausreicht, das Bett konstant in einem fluidisierten Zustand zu halten, und während Pulsationen gleichzeitig und zyklisch auf das Bett durch periodisches Einspritzen eines Fluids zur Einwirkung gebracht werden, dadurch gekennzeichnet, dass dieses periodische Einspritzen ein Einspritzen, bewirkt in dem Bett oberhalb des Abzugsniveaus, eines Teils der von dem oberen Teil der vertikalen Säule abgezogenen Flüssigkeit ist.

2. Vorrichtung zum kontinuierlichen Ionenaustausch, zur Anwendung des Verfahrens nach Anspruch 1, zwischen einer klaren Flüssigkeit oder einer suspendiertes Material enthaltenden Flüssigkeit und einem beweglichen Bett von Partikeln von Ionenaustauschersubstanzen, welche Vorrichtung verfügt über eine vertikale Säule (1), ausgestattet an ihrem unteren Ende mit einer konischen Spitze (6), die mit Zuführungsmitteln (13, 11) zur Einführung einer in der Säule zu behandelnden Flüssigkeit unter Druck versehen ist, und an ihrem oberen Teil mit Abführungsmitteln (5) zum Abführen der Flüssigkeit nach deren Behandlung in der Säule; über Einführungsmittel (4) an dem oberen Ende der Säule zum Einführen von Partikeln von Ionenaustauschersubstanzen und über Abzugsmittel (7) in der konischen Spitze (6), oberhalb der Zuführungsmittel (11), zum Abziehen von Partikeln der Ionenaustauschersubstanzen, dies derart, dass im Betrieb die Partikel der Ionenaustauschersubstanzen in der Säule (1) ein bewegliches und fluidisiertes Bett bilden, während ein Pulsationsgenerator in der Nähe der vertikalen Säule angeordnet ist, um periodisch ein Fluid in die Säule einzuspritzen, dadurch gekennzeichnet, dass dieser Pulsationsgenerator verfügt über ein vertikales Rohr (24), das an seinem unteren Ende geschlossen und an seinem oberen Ende an ein Ventilsystem (27) angeschlossen ist, das eine kommunizierende Verbindung entweder mit einer Druckluftquelle (25) oder mit der Atmosphäre gestattet, über eine Füllleitung (16) mit einem Rückschlagventil (22), die das vertikale Rohr (24) mit der Säule (1) in einem Niveau zwischen dem Niveau der Abführungsmittel (5) und dem oberen Niveau des beweglichen Bettes verbindet, um das vertikale Rohr mit Flüssigkeit zu füllen, und über eine Einspritzleitung (17) mit einem Rückschlagventil (23), die das vertikale Rohr (24) mit der Säule (1) in einem Niveau zwischen dem Niveau der Abzugsmittel (7) und dem oberen Niveau des beweglichen Bettes verbindet, um die Flüssigkeit in das Bett einzuspritzen.

3. Vorrichtung nach Anspruch 2, dadurch gekennzeichnet, dass die Säule (1) in ihrem Inneren Stabilisierungsmittel für den Flüssigkeitsstrom enthält, die von einer Vielzahl von Scheiben (2) gebildet sind, die von grossen Öffnungen (3) durchbrochen sind, die gegeneinander versetzt sind.

4. Vorrichtung nach Anspruch 2, dadurch gekennzeichnet, dass die konische Spitze (6) nach unten durch ein zylindrisches Teil (9) verlängert ist, das an seinem oberen Ende durch eine Trennwand (10) abgeschlossen ist, die in ihrem Zentrum von einer Öffnung durchbrochen ist, an der ein Rohrteil (11) angesetzt ist, das sich nach unten über ein Drittel der Höhe dieses zylindrischen Teils (9) erstreckt und das mit der konischen Spitze (6) über ein Rückschlagventil (12) in kommunizierender Verbindung steht, wobei die Zuführungsmittel (13) an diesem zylindrischen Teil (9) und tangential zu diesem und in einer Richtung rechtwinklig zur Achse der Säule (1) befestigt sind, während sich am unteren Teil dieses zylindrischen Teils ein Kegel (14) befindet, dessen Spitze mit Abscheidungsmitteln (15) zum Abführen von sandigen Materialien ausgestattet ist.

**Claims**

1. Process for continuous ion exchange between a clear liquid or liquid containing suspended material and a mobile bed of particles of ion exchanger substances, by passing this liquid through the said mobile bed, the latter being arranged in a vertical column and the particles moving downward overall and being withdrawn at a withdrawal level situated a little above the bottom of the column, while the liquid moves upwards from the bottom of the column where it is introduced in permanent fashion at a constant flowrate sufficient for maintaining the bed constantly in a fluidised state, and while pulsations are simultaneously and recurrently applied to this bed by periodic injection of a fluid, characterised in that this periodic injection is an injection, carried out in the said bed above the said withdrawal level, of a portion of the said liquid taken from the top of the vertical column.

2. Device for continuous ion exchange, for applying the process of Claim 1, between a clear liquid or liquid containing suspended material and a mobile bed of particles of ion exchanger substances, comprising: a vertical column (1) equipped at its lower end with a conical tip (6) provided with feeding means (13, 11) for introducing under pressure a liquid to be treated in the column, and at its upper end with discharge means (5) for discharging the liquid after treatment of the latter in the column; introducing means (4) at the upper end of the column for introducing particles of ion exchanger substances and withdrawal means (7) in the said conical tip (6), above the said feeding means (11), for withdrawing particles of ion exchanger substances, so that, in operation, the particles of ion exchanger substances form in the column (1) a mobile and fluidised bed, while a pulsation generator is arranged close to the vertical column for periodic injection of a fluid into the column, characterised in that this pulsation generator comprises: a vertical tube (24) closed at its lower end and connected at its upper end to a valve system (27) which permits communication either with a source of compressed air (25), or with the atmosphere; a filler pipe (16) with non-return valve (22), connecting the said vertical tube (24) to the said column (1) at a level between the level of the said discharge means (5) and the top of the mobile bed, for filling said vertical tube with liquid; and an injection pipe (17) with non-return valve (23), connecting the said vertical tube (24) to the column (1) at a level between the level of the withdrawal means (7) and the top of the mobile bed, for injecting the liquid into the bed.

3. Device according to Claim 2, characterised in that the column (1) contains in its interior means for stabilising the stream of liquid, composed of a plurality of discs (2) pierced with large apertures (3) which are arranged staggered with respect to each other.

4. Device according to Claim 2, characterised in that the said conical tip (6) is extended downwards by a cylindrical part (9) which is closed at its upper end by a partition (10) pierced at its centre with an aperture to which there is fitted a portion of tubing (11) which extends downwards over at least one third of the height of this cylindrical part (9) and which communicates with the conical tip (6) through a non-return valve (12), the said feeding means (13) being attached to this cylindrical part (9) and tangentially to the latter and following a direction perpendicular to the axis of the column (1), while at the bottom of the said cylindrical part there is a cone (14) the vertex of which is provided with discarding means (15) for removing sandy materials.

FIG.1

FIG.2